# EUROPEAN PATENT SPECIFICATION

(11) **EP 2 497 750 B1**
(45) Date of publication and mention of the grant of the patent: **30.10.2013**
(21) Application number: 11460012.5
(22) Date of filing: 11.03.2011
(51) Int. Cl.: C02F 1/00, C02F 1/42, B01D 37/04, B01J 49/00

(54) **Water treatment system, a method of its automatic regeneration and a controller for the water treatment system**
Wasserbehandlungssystem, Verfahren zur automatischen Regenerierung und Steuerung für das Wasserbehandlungssystem
Système de traitement des eaux, procédé pour sa régénération automatique et contrôleur pour le système de traitement des eaux

(43) Date of publication of application: 12.09.2012
(73) Proprietor: HUSTY M. Styczen, J. Hupert Spolka Jawna, 31-989 Krakow (PL)
(72) Inventor: Hupert, Jacek, 30-243 Krakow (PL); Sokolowski, Jacek, 31-279 Krakow (PL); Styczen, Marcin, 30-243 Krakow (PL)
(74) Representative: Radlowski, Jakub

(56) References cited:
- EP-A2- 1 147 736
- WO-A1-2005/044736
- WO-A1-2010/002351
- JP-A- 2009 112 921
- US-A- 4 804 465

## Description

The invention solves the problem of efficient and cost-effective control of water treatment, i.e. water filtering, purification, adjustment of water hardness, pressure control and the like. The invention solves another problem of providing an automated water treatment system governed by an automatic controller, optionally supervised remotely. The invention solves also another problem of providing the water treatment system with a controller adjusted to its specific features. The invention solves still another problem of providing the water treatment system with means for regeneration of the beds, and with means for automatic optimisation of regeneration.

The above or similar problems have been addressed to limited extent by several inventors. International patent application WO 2008062970 A1 (Jeon C.J. et al., KR; 29.05.2008) discloses an electro-chemical water processing apparatus and method for removing total nitrogen ingredients of ammonia nitrogen, nitrous acid nitrogen, nitrate nitrogen etc., organic materials of BOD (Biological Oxygen Demand) and COD (Chemical Oxygen Demand) induction ingredients, and cyanogen included in wastewater and dirty water. Proposed apparatus includes a wastewater collection reservoir; a wastewater storage retention reservoir that controls hydrogen ion concentration (pH), electrical conductivity and the wastewater flow; an electrolyte tank adjusting electrical conductivity of the wastewater to desired level; a pH conditioner tank that supplies a pH conditioning agent to the wastewater; an electrolyser including the anode and cathode plates and a number of electrodes arranged as an electrification body between the anode and cathode plates; and a controller. The latter grasps the state of wastewater through temperature measurement, controls the level of the wastewater collection reservoir, pH, electrical conductivity, the wastewater flow of the wastewater storage retention reservoir, the level of the electrolyser and which is connected to the anode and cathode plates to thereby control the electrolysis. The controller is connected to five water level sensors, three pumps, two solenoid valves, pH meter and pH sensor, flow meter, electrical conductivity meter, electric power source, electric current sensor, voltage sensor, display, driving map display, buzzer, manipulator, etc. Hereinbefore outlined system with dedicated controller is designed mainly for purposes of the wastewater electrolytic purification, however it does not offer any means for automatic self-regeneration of particular elements of the system, nor it describes an architecture of the controller.

Another patent application JP 2002320975 A (Sumimoto Heavy Industries, JP; 05.11.2002) discloses the water treatment equipment characterized in that it comprises the line mixers which produce mixed water by adding a coagulant and a pH conditioner into raw water, an introduction part to introduce mixed water, a cylindrical filtration tank on the top of which a coagulation part is installed to hold and convert mixed water into condensed water, a filter equipped with fibrous material installed in lower part of the filtration tank, an instrument measuring turbidity or chromaticity of treated water discharged from the filtration tank, and a controller which controls addition of coagulant and pH conditioner into the line mixers in accordance with turbidity or chromaticity. The controller provides a feedback from the measuring device to the valves adjusting addition of chemical agents to raw water. The controller neither monitors nor regulates the performance of any devices included in the system.

In Korean patent application KR 20070074881 A (Sam Young Lim Engineering Cons., KR; 18.07.2007) an apparatus for controlling the quality of water in real-time is proposed to maintain stable quality of water and satisfy a desired CCPP (Calcium Carbonate Precipitation Potential) condition of tap water, by monitoring the change of water quality in real-time and automatically putting corresponding chemicals according to the monitoring result. Raw water is treated via a number of baths, namely a pre-chlorine, a pre-ozone, a condensing, a filter, a post-ozone, an activated carbon, and a post-chlorine baths. First chemical bath is installed between the pre-ozone and condensing baths, while second chemical bath is installed after the activated carbon bath. Calcium hardness and pH of treated water are feedback-controlled by putting calculated amounts of Ca(OH)2, Na2CO3 and CO2 into first or second chemical baths. Automatic governance is realized through a monitoring controller and a monitoring control server. The system drafted here refers to water conditioning based on continuous addition of chemical agents into raw water, therefore it does propose any solutions directly applicable into regenerative systems. The controller's structure has not been described.

United States patent document US 4385357 A (Water Refining Co., US; 24.05.1983) describes a water treatment system that includes a water treatment tank containing a resin bed through which water is passed for treatment thereof during normal operation of the treatment system. A brine tank contains a brine solution which, when passed through the resin bed, results in regeneration of the treatment effectiveness of the bed. A plurality of electrically actuatable valves direct water through the treatment tank during normal operation of the treatment system and direct brine solution through the treatment tank in a regeneration operation. When regeneration is desired, a backwash cycle is initiated. During the backwash cycle the softener is bypassed and raw water is supplied to the outlet distributor in the water treatment tank. This backwash process loosens the resin bed and facilitates regeneration of the zeolite. In next step the brine is directed from the brine tank into the resin bed, and finally, when the regeneration of the bed is completed, the remnants of the brine are washed out. A controlling device for the water treatment system includes the means for manually entering control data, a display, and a sensor for sensing the volume of water treated by the water treatment system. The controller provides electrical control signals to the plurality of electrically actuatable valves. The sequence, duration, and time of occurrence of the electrical control signals is determined by the control data entered manually. Proposed system is limited to the water softener and brine tank with necessary piping, and the controller is designed only for controlling of the regeneration process. No separate filtration of raw water is proposed.

Another United States patent application US 2009250397 A1 (Geisen C.R. et al., US; 08.10.2009) discloses the systems and methods for combined filtering and softening of water. Proposed system comprises a water filter, a water softener operatively connected to the water filter, and a controller operatively connected to the water filter and the water softener, via wired or wireless connections. The controller is configured to alter at least the performance of the water filter based on the performance of the water softener, and/or the performance of the water softener based on the performance of the water filter. The controller monitors at least one of the following: a salt level, a quantity of water used, and a time remaining until maintenance is required. Besides, it adjusts a water hardness based upon monitored values. The controller is located a substantial distance from the water filter and the water softener. The methods may include filtering incoming water, monitoring the hardness of the incoming water, and softening the incoming water when the water hardness is above a maximum level. Furthermore, the water softening system is configured to self-clean, e.g. in predefined periods, water softening component may run a purge cycle in which case the system may be cleaned. In addition, self-cleaning may include back flushing water softening component when water softening component is unable to soften the incoming water to a level below the maximum acceptable hardness. Proposed system is a semi-automated one and it is a good solution in cases of relatively low demand for processed water. However, it does not assure safe and undisturbed work requiring no permanent maintenance in heavy-duty water supply systems.

European patent application EP 0934775 A1 (Ecowater Systems Inc., US; 11.08.1999) describes a water softener and a method of operating the same, allowing for the efficient use of either NaCl or KCl as the regenerant salt. A user interface is provided to allow the user to indicate to the computer controlling the water softener which of these salts is being used. The computer controller adjusts the fill time and brine time, depending on the type of regenerant salt used and on the temperature of the brine. The controller determines when to regenerate resin bed and to what capacity, depending on the hardness of the water to be treated. However, no water hardness meters are included into the system, so value of the water hardness shall be entered manually by the user. In this solution a number of functionalities is limited, no filtration of raw water or adjustment of the water pressure is proposed, and the controlling device cannot be regulated remotely.

Another European patent application EP 0555426 A1 (Bruner Corp., US; 18.08.1993) presents much more sophisticated programmable water treatment controller for progressive flow systems. This electronic appliance is a set consisting of microprocessor and peripherals, and it provides a computer program called integrated initiator and sequencer for controlling regeneration of water softening and filtering systems. The controller or associated external device initiates the regeneration sequence or, in the alternative, an alarm based on a programmable prediction time, total volume through the water treatment device or combinations of the foregoing. The sequence of regeneration is controlled in response to selected parameters programmable by the user for valve actuation and timing. Multiple water treatment systems may be controlled in alternating, parallel, or progressive control schemes through communication between controllers, attached to each system.

International patent application WO 2007103234 A2 (Kinetico In. et al., US; 13.09.2007) discloses a control module that activates the regeneration cycle of a water softener based on programmable parameters such as time since last regeneration, set time and day, and other external signals such as an amount of water treated since last regeneration. The control unit's programmable controller allows the same unit to be used in a variety of applications and to be programmed to meet specific operating requirements such as maximum allowable time between regeneration cycles. The control module may also control the duration of chlorine production and provide alarm outputs in the event of system malfunction. Regeneration with brine and backwashing is taken into account. Proposed controller is designed for small water supply systems thus number of functionalities offered is significantly reduced.

Controlling of small water supply systems is addressed also in Japanese patent application JP 2004237209 A (Miura Kogyo KK, JP; 26.08.2004). In proposed control method for the regeneration of a water softener, wherein a resin cylinder is filled with an ion exchange resin, a regeneration period is regulated on the basis of a hardness of tap water and at least one of subsequent variables: instantaneous flow rate of raw water during passage through the resin bed cylinder taken from previous regeneration process, temperature of raw water, total number of cations in raw water, and share of ions Na⁺ in all cations in treated water.

More developed system is proposed by the same applicant in Japanese patent application JP 2003001251 A (Miura Kogyo KK et al., JP; 07.01.2003), where the water softening device is provided with means for measuring the hardness of feedwater supplied to the softener, means for measuring the flow rate of treated water after passing through the softener, means for detecting the brine concentration and usage in regenerating operation. Further, there are included hardness leakage detection means for measuring hardness of treated water after passing through the water softener and detecting hardness leakage.

In another Japanese patent application JP 10094786 A (Samson Co. Ltd., JP; 14.04.1998) the inventor approaches another problem of preventing a softening device from being incompletely regenerated if the raw water pressure is below the threshold. In the regeneration process of the softener, the raw water is introduced into the resin column and the ion exchange resin bed is backwashed while being stirred. Then a chemical process is performed by introducing a brine into the resin bed column. Finally, used brine is discharged from the resin column and the latter is washed. If the raw water pressure detected by the raw water pressure detecting device is lower than a preset value, the controller stops the operation of a timer device for a fixed time interval, and the overall time for the chemical operation or the washing process is prolonged by this time interval.

Some other examples of known water treatment systems and its control one those of the documents WO 2005044736, EP1147736, WO 2010002351, JP 2009112921 and US 4804465.

None of solutions known in the state of the art, nor simple combination of disclosed inventions, answers identified need for a universal, automated, configurable, remotely accessible and manually accessible controller for self-regenerating water treatment system, that may comprise any combination of facultative appliances, like a mechanical filter, a conditioner, e.g. a softener, a chemical filter, e.g. an iron remover, a dosing pump, a regenerant tank, and a number of input and output devices controlled directly by the controller. It was found, that a solution is expected for a reliable water treatment system that is efficient in usage of regenerating agents and minimizes time and frequency of the maintenance services. The invention described hereinafter answers all these expectations.

A controller for a water treatment system according to the invention is specified in claim 1.

The chemical filter motor and the conditioner motor open and close the valves inside the filter's head and the conditioner's head, respectively. By opening and closing these valves the regeneration processes are controlled. The chemical filter motor and the conditioner motor may comprise the cams positioned according to the steering signals. In this case the controller selects appropriate position of particular cam.

Backwashing operation may be applied to any one of the chemical filter, the mechanical filter, and the conditioner, according to actual performance of given appliance. Appropriate procedure, with or without backwash, is initiated by the controller if the performance of the appliance falls below accepted level, or if scheduled time for maintenance has been approached.

The chlorine generator and conductance detector is a single device. The chlorine is released to the solution of salt (NaCl, KCl or other chloride or chlorate) dissolved in water, by electrolysis of the brine solution. Measurement of the current intensity during electrolysis gives precise information about the brine concentration, so in one step the chlorine is generated and the solution conductance and further its concentration are measured. This multifunction device is thus controlled by one controlling device. Value of the brine concentration is used to monitor the quality of the regeneration process. For example if this value falls below preset threshold value, the time of the regeneration process may be increased, and/or its speed, e.g. the brine flow, may be decreased. In some cases the controller may decide about repetition of the regeneration process.

In the regeneration process usually NaCl is applied, and KCl is also broadly used. However, in some arrangements another kind of salt may be more suitable. For example if the chemical filter is an iron remover, then potassium permanganate is an appropriate choice.

Each of dedicated buffers adjusts the parameters of internal signals of the controller and the parameters of signals of particular external devices, e.g. signal amplitude, slope, temporal characteristics and the like. The external devices may operate, for example, with different voltages, so each connection between the controller and a device requires a dedicated buffer. Given buffer may cooperate with devices offered by different producers, provided that the parameters of the signal of these devices are basically the same. In case of significant differences, appropriate dedicated buffer shall be reconfigured. The buffers applied on all inputs and outputs of the controller make it very flexible in application to different water treatment appliances, and practically independent from particular specifications of the signal characteristics defined by the appliance's producer.

The controller may also contain a pressure controlling device, which is provided through a dedicated buffer-3 with values of pressure, measured in particular in main pipeline feeding the system with raw water. The pressure is measured by a pressure transducer.

In preferred embodiment of the invention, the controller contains the chemical filter controlling device which is provided through a dedicated buffer-1 with water flow values measured by a filter Hall detector. It is also provided through a dedicated buffer-2 with values of the filter motor position measured by a filter optical sensor, advantageously a photocell, and preferably it is provided with pressure data generated by the pressure controlling device, and with automatic backwash data provided with the backwash filter controlling device.

In strongly recommended implementation, the conditioner controlling device is provided through a dedicated buffer-4 with water flow values measured by a conditioner Hall detector, and it is provided through a dedicated buffer-5 with values of the conditioner motor position measured by a conditioner optical sensor, advantageously a photocell, and preferably it is provided with pressure data generated by the pressure controlling device, and with automatic backwash data provided with the backwash filter controlling device, and with chlorine generation and conductance data generated by the chlorine generator and conductance detector controlling device, controlling the chlorine generator and conductance detector through the dedicated buffer-6.

In another embodiment of the controller, the backwash filter controlling device exchanges data with the filter controlling device and the conditioner controlling device, and the dosing pump controlling device is provided with data by the conditioner controlling device.

The controller may also have an interlocking input communicating through a dedicated buffer-7 for immediate blocking of regeneration of the filter, or the conditioner, or the mechanical filter.

Optionally, the controller has a conditioner regeneration input communicating through a dedicated buffer-8 for immediate triggering of regeneration of the conditioner, and it has a filter regeneration input communicating through a dedicated buffer-9 for immediate triggering of regeneration of the filter.

It is important, in particular in the systems supervised by a servicing personnel, that the controller has an alarm output communicating through a dedicated buffer-10 for immediate triggering of an alarm device, advantageously a flash-light, and/or a sound device, a beeper or a buzzer.

It is strongly recommended that the controller has an interface for communication with external devices, preferably through a converter and a router with an external computer, or with a network computer via a network, e.g. through Internet, or corporate network.

The controller has a central processing unit, a memory unit, a real time clock with a battery, and a screen, e.g. a backlight illuminated LCD screen, with a touchpad, or a touch screen.

The water treatment system according to the invention (claim 9) is provided with a controller as described hereinbefore. This controller is communicating with the pressure transducer measuring the water pressure in main pipeline. It also communicates with the devices mounted in the chemical filter: the filter Hall detector, the filter optical sensor, and the filter motor. Similarly, the controller communicates with devices mounted in the conditioner: the conditioner Hall detector, the conditioner optical detector, the conditioner motor, and the chlorine generator and conductance detector. Besides, the controller communicates with the mechanical filter and with the dosing pump, and preferably with external devices, advantageously through the converter and the router with an external computer, or with a network computer via a network. This might be an Internet, or corporate network.

In primary embodiment of the water treatment system the chemical filter, advantageously an iron remover, is provided with a filter valve, and so the conditioner is provided with a conditioner valve.

Preferably the chemical filter, which may be the iron remover, is provided with a filter regenerative agent tank, e.g. the potassium permanganate solution tank, and a filter sewage outlet. It is recommended that, by analogy, the conditioner is provided with a conditioner regenerative agent tank, e.g. the brine tank, and a conditioner sewage outlet.

The controller in the water treatment system is supplied with energy through a 12 V AC adapter, and it is placed, preferably in a waterproof casing, on the wall of the water treatment room, or in the filter housing or in the conditioner housing.

Also new method of automatic regeneration of described above water treatment system, provided with the controller as described thereinbefore is proposed (claim 13). According to this method the controller is monitoring the water treatment ability of said water treatment system, and it triggers the regeneration cycle of particular system elements according to their actual performance and/or in preset intervals. The time and intensity of backwashing of the chemical filter, mechanical filter and the conditioner beds is adjusted by the controller and it is powered by the water pressure in main pipeline. The regenerative agent is supplied in saturated solution, preferably the brine. The time of regeneration is adjusted according to actual water pressure and actual concentration of solution so that the amount of the regenerative agent, preferably salt, advantageously NaCl or KCI, or potassium permanganate, used in the regeneration process is optimised.

The invention in preferred embodiments is schematically shown on the drawing, where:

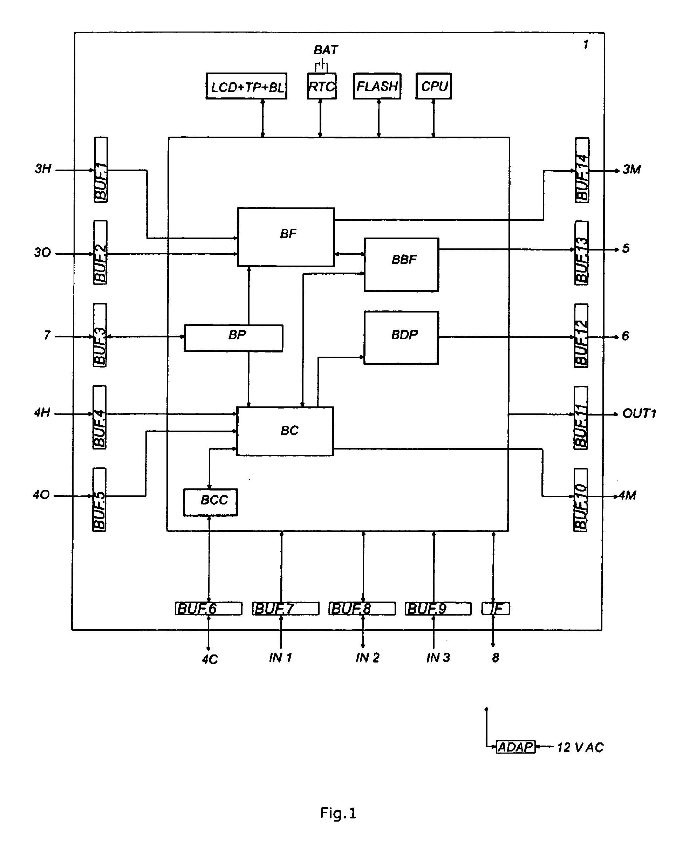

Fig.1 shows simplified structure of the controller for the water treatment system, and

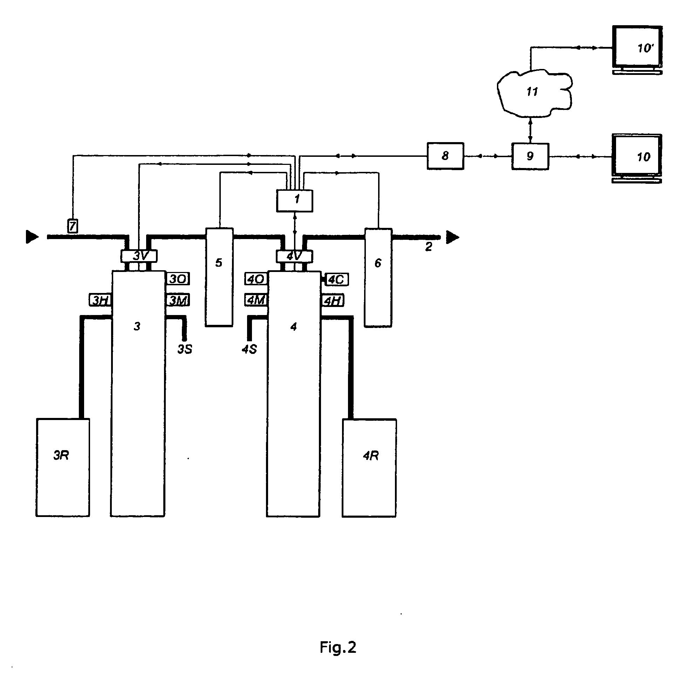

Fig.2 illustrates schematically a combination of selected devices organised in the automated water treatment system.

In preferred embodiment of the invention the controller (1) for the water treatment system contains the chemical filter controlling device (BF) providing the chemical filter motor (3M) with steering signal through the dedicated buffer-14 (BUF.14), and it contains the backwash filter controlling device (BBF) providing the mechanical filter (5) with steering signal for automatic backwash through the dedicated buffer-13 (BUF.13). It contains also the dosing pump controlling device (BDP) providing the dosing pump (6) with steering signal through the dedicated buffer-12 (BUF.12), and it contains the conditioner controlling device (BC) providing the conditioner motor (4M) with steering signal through the dedicated buffer-10 (BUF.10). The controller contains the chlorine generator and conductance detector controlling device (BCC) providing the chlorine generator and conductance detector (4C) with steering signal through the dedicated buffer-6 (BUF.6).

The controller contains the pressure controlling device (BP) provided through the dedicated buffer-3 (BUF.3) with pressure values measured by the pressure transducer (7).

In this controller the chemical filter controlling device (BF) is provided through the dedicated buffer-1 (BUF.1) with the water flow values measured by the filter Hall detector (3H), and it is provided through the dedicated buffer-2 (BUF.2) with values of the filter motor (3M) position measured by the filter optical sensor (30), advantageously a photocell, and preferably it is provided with pressure data generated by the pressure controlling device (BP), and with automatic backwash data provided with the backwash filter controlling device (BBF).

The conditioner controlling device (BC) of the controller is provided through the dedicated buffer-4 (BUF.4) with the water flow values measured by the conditioner Hall detector (4H), and it is provided through the dedicated buffer-5 (BUF.5) with values of the conditioner motor (4M) position measured by the conditioner optical sensor (40), advantageously a photocell, and preferably it is provided with pressure data generated by the pressure controlling device (BP), and with automatic backwash data provided with the backwash filter controlling device (BBF), and with chlorine generation and conductance data generated by the chlorine generator and conductance detector controlling device (BCC) controlling the chlorine generator and conductance detector (4C) through the dedicated buffer-6 (BUF.6).

The backwash filter controlling device (BBF) exchanges data with the filter controlling device (BF) and the conditioner controlling device (BC). In turn, the dosing pump controlling device (BDP) is provided with data by the conditioner controlling device (BC).

To enable manual interruption of the regeneration process, e.g. in emergency, the controller is furnished with the interlocking input (IN1) communicating through the dedicated buffer-7 (BUF.7) for immediate blocking of regeneration of the filter (3), or the conditioner (4), or the mechanical filter (5).

For the same reason the controller is ready to accept opposite commands. It has a conditioner regeneration input (IN2) communicating through the dedicated buffer-8 (BUF.8) for immediate triggering of regeneration of the conditioner (4), and it has the filter regeneration input (IN3) communicating through the dedicated buffer-9 (BUF.9) for immediate triggering of regeneration of the filter (3).

The controller has an alarm output (OUT1) communicating through the dedicated buffer-10 (BUF.10) for immediate triggering of an alarm device, like the flash-light, and the sound device - the buzzer.

Proposed controller has an interface (IF) for communication with external devices, through a converter (8) and a router (9) with an external computer (10), or with a network computer (10') via a network (11) - e.g. Internet.

The controller also has the central processing unit (CPU), the memory unit (FLASH), the real time clock (RTC) with the battery (BAT), and the backlight (BL) illuminated LCD screen (LCD) with the touchpad (TP), which in another embodiment is replaced by the touch screen (LCD+TP+BL).

In strongly recommended embodiment the water treatment system is provided with the controller as described above. This controller (1) is communicating with the pressure transducer (7) measuring the water pressure in main pipeline (2), the filter Hall detector (3H), the filter optical sensor (30), the filter motor (3M), the mechanical filter (5), the conditioner Hall detector (4H), the conditioner optical detector (40), the conditioner motor (4M), the chlorine generator and conductance detector (4C), the dosing pump (6), and with external devices, advantageously through the converter (8) and the router (9) with the external computer (10), or with the network computer (10') via the network (11).

In presented embodiment the chemical filter (3) is the iron remover, and it is provided with the filter valve (3V), and the conditioner (4) is the softener, provided with the conditioner valve (4V).

The chemical filter (3), i.e. the iron remover, is provided with the filter regenerative agent tank (3R) and the filter sewage outlet (3S), and the conditioner (4), i.e. the softener, is provided with the conditioner regenerative agent tank (4R) and the conditioner sewage outlet (4S).

The controller (1) in the water treatment system is supplied with energy through a 12 V AC adapter (ADAP). It is placed, in a waterproof casing, in the filter (3) housing. However, the controller may be mounted in the waterproof casing on the wall of the water treatment room, or in the conditioner (4) housing, according to the user's choice.

According to the method of automatic regeneration of the water treatment system provided with the controller, this controller (1) is monitoring the water treatment ability of the water treatment system, and it triggers the regeneration cycle of particular system elements according to their actual performance, or in preset intervals. The time and intensity of backwashing of the filter beds is adjusted by the controller and it is powered by the water pressure in main pipeline, and the regenerative agent is supplied in saturated solution of potassium permanganate to the iron remover, and saturated brine of domestic salt to the softener. The time of regeneration is adjusted according to actual water pressure and actual concentration of solution so that the amount of the regenerative agents, namely NaCl and potassium permanganate, used in the regeneration process is optimised, preferably minimised.

## Claims

1. A controller (1) for a water treatment system comprising the chemical filter (3), the mechanical filter (5), the conditioner (4) and the dosing pump (6) all connected to the main pipeline (2) **characterised in that** it contains a pressure controlling device (BP) provided through a dedicated buffer-3 (BUF.3) with the values of water pressure in the main pipeline (2) measured by a pressure transducer (7) and it contains a chemical filter controlling device (BF) providing a chemical filter motor (3M) cooperating with the chemical filter (3) with steering signal through a dedicated buffer-14 (BUF.14), and where the chemical filter controlling device (BF) is provided through a dedicated buffer-1 (BUF.1) with water flow values measured by a chemical filter Hall detector (3H) cooperating with the chemical filter (3), and which is also provided through a dedicated buffer-2 (BUF.2) with the position values of the chemical filter motor (3M) measured by a chemical filter optical sensor (30) cooperating with the chemical filter (3), advantageously a photocell, and it contains a backwash filter controlling device (BBF) providing a mechanical filter (5) with steering signal for automatic backwash through a dedicated buffer-13 (BUF.13), and it contains a dosing pump controlling device (BDP) providing a dosing pump (6) with steering signal through a dedicated buffer-12 (BUF.12), and it contains a conditioner controlling device (BC) providing a conditioner motor (4M) cooperating with the conditioner (4) with steering signal through a dedicated buffer-10 (BUF.10), and where the conditioner controlling device (BC) is provided through a dedicated buffer-4 (BUF.4) with water flow values measured by a conditioner Hall detector (4H) cooperating with the conditioner (4), and which is also provided through a dedicated buffer-5 (BUF.5) with the position values of the conditioner motor (4M) measured by a conditioner optical sensor (40) cooperating with the conditioner (4), advantageously a photocell, and it contains a chlorine generator and conductance detector controlling device (BCC) providing a chlorine generator and conductance detector (4C) cooperating with the conditioner (4) with steering signal through a dedicated buffer-6 (BUF.6), and it has an interface (IF) for communication with external devices, preferably through a converter (8) and a router (9) with an external computer (10), or with a network computer (10') via a network (11).

2. The controller according to claim 1 **characterised in that** the chemical filter controlling device (BF) is provided with pressure data generated by the pressure controlling device (BP), and with automatic backwash data provided with the backwash filter controlling device (BBF).

3. The controller according to claim 1 or 2 **characterised in that** the conditioner controlling device (BC) is provided with pressure data generated by the pressure controlling device (BP), and with automatic backwash data provided with the backwash filter controlling device (BBF), and with chlorine generation and conductance data generated by the chlorine generator and conductance detector controlling device (BCC) controlling the chlorine generator and conductance detector (4C) through the dedicated buffer-6 (BUF.6).

4. The controller according to any of preceding claims **characterised in that** the backwash filter controlling device (BBF) exchanges data with the chemical filter controlling device (BF) and with the conditioner controlling device (BC), and **in that** the dosing pump controlling device (BDP) is provided with data by the conditioner controlling device (BC).

5. The controller according to any of preceding claims **characterised in that** it has an interlocking input (IN1) communicating through a dedicated buffer-7 (BUF.7) for immediate blocking of regeneration of the chemical filter (3), or the conditioner (4), or the mechanical filter (5).

6. The controller according to any of preceding claims **characterised in that** it has a conditioner regeneration input (IN2) communicating through a dedicated buffer-8 (BUF.8) for immediate triggering of regeneration of the conditioner (4), and it has a chemical filter regeneration input (IN3) communicating through a dedicated buffer-9 (BUF.9) for immediate triggering of regeneration of the chemical filter (3).

7. The controller according to any of preceding claims **characterised in that** it has an alarm output (OUT1) communicating through a dedicated buffer-10 (BUF.10) for immediate triggering of an alarm device, advantageously a flash-light, and/or a sound device, a beeper or a buzzer.

8. The controller according to any of preceding claims **characterised in that** it has a central processing unit (CPU), a memory unit (FLASH), a real time clock (RTC) with a battery (BAT), and a backlight (BL) illuminated LCD screen (LCD) with a touchpad (TP), or a touch screen (LCD+TP+BL).

9. A water treatment system provided with a the controller as described in any of claims 1-8 and comprising the chemical filter (3), the mechanical filter (5), the conditioner (4) and the dosing pump (6) all connected to the main pipeline (2) **characterised in that** said controller (1) is communicating with the pressure transducer (7) measuring the water pressure in the main pipeline (2), and with the chemical filter Hall detector (3H), the chemical filter optical sensor (30), and the chemical filter motor (3M), all cooperating with the chemical filter (3), and with the mechanical filter (5), and with the conditioner Hall detector (4H), the conditioner optical detector (40), the conditioner motor (4M), and the chlorine generator and conductance detector (4C), all cooperating with the conditioner (4), and with the dosing pump (6), and with external devices, advantageously through the converter (8) and the router (9) with an external computer (10), or with a network computer (10') via a network (11).

10. The water treatment system according to claim 9 **characterised in that** the chemical filter (3), advantageously an iron remover, is provided with a chemical filter valve (3V), and the conditioner (4) is provided with a conditioner valve (4V).

11. The water treatment system according to claim 9 or 10 **characterised in that** the chemical filter (3), advantageously an iron remover, is provided with a chemical filter regenerative agent tank (3R) and a chemical filter sewage outlet (3S), and the conditioner (4) is provided with a conditioner regenerative agent tank (4R) and a conditioner sewage outlet (4S).

12. The water treatment system according to claim 9 or 10 or 11 **characterised in that** the controller (1) is supplied with energy through a 12 V AC adapter (ADAP), and the controller (1) is placed, preferably in a waterproof casing, on the wall of the water treatment room, or in the chemical filter (3) housing or in the conditioner (4) housing.

13. A method of automatic regeneration of the water treatment system comprising the chemical filter (3), the mechanical filter (5), the conditioner (4) and the dosing pump (6) all connected to the main pipeline (2), as described in any of claims 9-12, and provided with the controller as described in any of claims 1-8 **characterised in that** said controller (1) is monitoring the water treatment ability of said water treatment system, and it triggers the regeneration cycle of particular system elements according to their actual performance and/or in preset intervals, whilst time and intensity of backwashing of the filters' beds is adjusted by the controller and it is powered by the water pressure in main pipeline, and the regenerative agent is supplied in saturated solution, preferably a brine, and while the time of regeneration is adjusted according to actual water pressure and actual concentration of solution so that the amount of the regenerative agent, preferably salt, advantageously NaCl or KCl, or potassium permanganate, used in the regeneration process is optimised.

## Patentansprüche

1. Steuergerät (1), bestimmt für die Wasseraufbereitungsanlage, die aus einem chemischen Filter (3), einem mechanischen Filter (5), einem Ionenaustausch-Wassserkonditionierer (4) und einer Dosierpumpe (6) besteht, wo alle genannten Komponenten an die Hauptrohrleitung (2) angeschlossen sind, **dadurch gekennzeichnet, dass**, es über eine Druckregeleinheit (BP) verfügt, welche über den dedizierten Puffer 3 (BUF.3) versorgt wird, wo die Wasserdruckwerte in der Hauptrohrleitung (2) mit einem Druckaufnehmer (7) gemessen werden, und das mit einer Einheit zur Steuerung des chemischen Filters (BF) ausgerüstet ist, welche ein Steuersignal an den Motor des mechanischen Filters (3M), das mit dem chemischen Filter (3) zusammenarbeitet, über den dedizierten Puffer 14 (BUF.14) sendet, und in dem die Einheit zur Steuerung des chemischen Filter (BF) über den dedizierten Puffer (BUF.1) versorgt wird, wo die Wasserdurchsatzwerte mit dem Hall-Sensor des chemischen Filters (3H) gemessen werden, welches mit dem chemischen Filter (3) zusammenarbeitet und die auch über den dedizierten Puffer 2 (BUF.2) versorgt wird, wo die Positionswerte des Motors des chemischen Filters (3M), welches mit dem chemischen Filter (3) zusammenarbeitet, mit einem optischen Sensor des chemischen Filters (30), und am besten mit einer Fotozelle, gemessen werden, und das über eine Einheit zur Steuerung des Rückspülfilters (BBF) verfügt, weiche ein Signal zur Steuerung der automatischen Rückspülung über den dedizierten Puffer 13 ((BUF.13) an das mechanische Filter (5) sendet, und das mit einer Einheit zur Steuerung der Dosierpumpe (BDP) ausgerüstet ist, weiche ein Steuersignal über den dedizierten Puffer 12 (BUF.12) an die Dosierpumpe (6) sendet, und das über eine Einheit zur Steuerung des Ionenaustausch-Konditionierers (BC) verfügt, welche ein Steuersignal über den dedizierten Puffer (10 (BUF.10) an den Motor des Ionenaustausch-Konditionierers (4M), der mit dem Ionenaustausch-Konditionierer 4) zusammenarbeitet, sendet, und in dem die Einheit zur Steuerung des Ionenaustausch-Konditionierers (BC) über den dedizierten Puffer 4 (BUF.4) versorgt wird, wo die Wasserdurchsatzwerte mit dem Hall-Sensor des Ionenaustausch-Konditionierers (4H) gemessen werden, welcher mit dem Ionenaustausch-Konditionierer (4) zusammenarbeitet, und weiche auch mit einem dedizierten Puffer 5 (BUF.5) ausgerüstet ist, wo die Positionswerte des Motors des Ionenaustausch-Konditionierers (4M) mit dem optischen Sensor des Ionenaustausch-Konditionierers (40), der mit dem Ionenaustausch-Konditionierer (4) zusammenarbeitet, und am besten mit einer Fotozelle, gemessen werden, und das über eine Einheit zur Steuerung des Chlorerzeugers und des Leitfähigkeitsdetektors (BCC) verfügt, weiche ein Steuersignal über den dedizierten Puffer 6 (BUF.6) an den Chlorerzeuger und Leitfähigkeitsdetektor (4C), die mit dem Ionenaustausch-Konditionierer (4) zusammenarbeiten, sendet, und welche mit einer Schnittstelle (IF) versehen ist, die zur Kommunikation mit den externen Einheiten, am besten über einen Wandler (8) und einen Route (9) mit externem Computer (10) oder einem Netzcomputer (10') über ein Netzwerk (11), dient.

2. Steuergerät nach Anspruch 1, **dadurch gekennzeichnet, dass** es an die Einheit zur Steuerung des chemischen Filters (BF) Daten aus der Druckregeleinheit (BP) sowie Daten zur automatischen Rückspülung aus der Einheit zur Steuerung des Rückspülfilters (BBF) übertragen werden.

3. Steuergerät nach Anspruch 1 oder 2, **dadurch gekennzeichnet, dass** es an die Einheit zur Steuerung des Ionenaustausch-Konditionierers (BC) Daten aus der Druckregeleinheit (BP) sowie Daten zur automatische Rückspülung aus der Einheit zur Steuerung des Rückspülfilters (BBF), wie auch Daten zur Chlorerzeugung und Leitfähigkeit aus der Einheit zur Steuerung des Chlorerzeugers und des Leitfähigkeitsdetektors (BCC), die den Betrieb des Chlorerzeugers und des Leitfähigkeitsdetektors (4C) über den dedizierten Puffer 6 ((BUF.6) regelt, übertragen werden.

4. Steuergerät nach einem der vorhergehenden Ansprüche, **dadurch gekennzeichnet, dass** die Einheit zur Steuerung des Rückspülfilters (BFF) die Daten mit der Einheit zur Steuerung des chemischen Filters (BF) und mit der Einheit zur Steuerung des Ionenaustausch-Konditionierers (BC) austauscht, sowie dadurch, dass an die Einheit zur Steuerung der Dosierpumpe (BDP) die Daten aus der Einheit zur Steuerung des Ionenaustausch-Konditionierers (BC) übertragen werden.

5. Steuergerät nach einem der vorhergehenden Absprüche, **dadurch gekennzeichnet, dass** es mit einem Verriegelungseingang (IN1) versehen ist, der sich über den dedizierten Puffer 7 ((BUF.7) verbindet, um die Regenerierung des chemischen Filters (3) oder des Ionenaustausch-Konditionierers (4) oder des mechanischen Filters (5) sofort zu verriegeln.

6. Steuergerät nach einem der vorhergehenden Ansprüche, **dadurch gekennzeichnet, dass** es mit einem Eingang für die Regenerierung des Ionenaustausch-Konditionierers (IN2) versehen ist, der sich über den dedizierten Puffer 8 (BUF.8) verbindet, um die Regenerierung des Ionenaustausch-Konditionierers (4) sofort zu einzuschalten, sowie dadurch, dass es mit einem Eingang für die Regenerierung des chemischen Filters (IN3) versehen ist, der sich über den dedizierten Puffer 9 ((BUF.9) verbindet, um die Regenerierung des chemischen Filters (3) sofort zu einzuschalten.

7. Steuergerät nach einem der vorhergehenden Ansprüche, **dadurch gekennzeichnet, dass** es mit einem Notausgang (OUT1) versehen ist, der sich über den dedizierten Puffer 10 (BUF.10) verbindet, um die Notanlage, am besten ein Blinklicht und/oder ein Tonsignalgerät oder einen Summer, sofort einzuschalten.

8. Steuergerät nach einem der vorhergehenden Ansprüche, **dadurch gekennzeichnet, dass** es mit einer Zentraleinheit (CPU), einer Speichereinheit (FLASH), einer Echtzeituhr (RTC) mit Batterie (BAT) und einem LCD-Display (LCD) mit Hinterleuchtung (BL) und Touchpad (TP) oder einem Touchscreen (LCD+TP+BL) ausgerüstet ist.

9. Wasseraufbereitungsanlage, die mit dem Steuergerät ausgerüstet ist, das in einem der vorhergehenden Ansprüche beschrieben wurde und aus einem chemischen Filter (3), einem mechanischen Filter (5), einem Ionenaustausch-Konditionierer (4) und einer Dosierpumpe (6) besteht, wo alle genannten Komponenten an die Hauptrohrleitung (2) abgeschlossen sind, **dadurch gekennzeichnet, dass** sich das Steuergerät (1) mit dem Druckaufnehmer (7) zur Messung des Wasserdrucks in der Hauptrohrleitung (2) und mit dem Hall-Sensor des chemischen Filters (3H), dem optischen Sensor des chemischen Filters (30) und dem Motor des chemischen Filters (3M), von denen alle mit dem chemischen Filter (3) und dem mechanischen Filter (5) zusammenarbeiten, sowie mit dem Hall-Sensor des Ionenaustausch-Konditionierers (4H), dem optischen Sensor des Ionenaustausch-Konditionierers (40), dem Motor des Ionenaustausch-Konditionierers (4M) und dem Chlorerzeuger und Leitfähigkeitssensor (4C), von denen alle mit dem Ionenaustausch-Konditionierter (4) zusammenarbeiten, sowie mit der Dosierpumpe (6) und den externen Einheiten, am besten über einen Wandler (8) und einen Router (9) mit dem externen Computer (10) oder dem Netzcomputer (10') über das Netzwerk (11) verbindet.

10. Wasseraufbereitungsanlage nach Anspruch 9, **dadurch gekennzeichnet, dass** das chemische Filter (3), und am besten der Enteiser, mit einem Ventil des chemischen Filters (3V), dagegen der Ionenaustausch-Konditionierer mit einem Ventil des Ionenaustausch-Konditionierers (4V) ausgerüstet sind.

11. Wasseraufbereitungsanlage nach Anspruch 9 oder 10, **dadurch gekennzeichnet, dass** das chemische Filter (3), und am besten der Enteiser, mit einem Speicher für das Regenerationsmittel des chemischen Filters (3R) und die Auslauföffnung für die Abwässer aus dem chemischen Filter (3S), dagegen der Ionenaustausch-Konditionierer (4) mit einem Speicher für das Regenerationsmittel des Ionenaustausch-Konditionierers (4R) und die Auslauföffnung für die Abwässer aus dem Ionenaustausch-Konditionierer (4S) ausgerüstet sind.

12. Wasseraufbereitungsanlage nach Anspruch 9 oder 10 oder 11, **dadurch gekennzeichnet, dass** das Steuergerät (1) mit der Stromenergie über den Anschluss 12 V AC (ADAP) versorgt wird, wobei das Steuergerät (1) an der Wand der Aufbereitungsnlage, am besten in einem wasserdichten Gehäuse, oder im Gehäuse des chemischen Filters (3) oder im Gehäuse des Ionenaustausch-Konditionierers (4) angeordnet ist.

13. Automatisches Regenerierverfahren der Wasseraufbereitungsanlage, die aus einem chemischen Filter (3), einem mechanischen Filter (5), einem Ionenaustausch-Konditionierer (4) und einer Dosierpumpe (6) besteht, wo alle Komponenten an die Hauptrohrleitung (2) angeschlossen sind, wie es in einem der Ansprüche 9-12 beschrieben wurde, und die mit dem Steuergerät ausgerüstet ist, das in einem der Ansprüche 1-8 beschrieben wurde, **dadurch gekennzeichnet, dass** das genannte Steuergerät (1) die Wasseraufbereitungsfähigkeit der erwähnten Wasseraufbereitungsanlage überwacht und das Regenerierverfahren bestimmter Anlagenkomponenten nach ihrer Ist-Leistung und/oder dem Sollintervall in die Wege leitet. Die Zeit und die Intensität des Rückspülungsprozess von Filterbetten, der mit dem Druckwasser aus der Hauptrohrleitung versorgt wird, werden dagegen mit dem Steuergerät geregelt. Das Regenerationsmittel wird in Form einer gesättigten Lösung, am besten der Sole, zugeführt, und die Regenerierungszeit wird nach dem Ist-Wasserdruck und der Ist-Lösungskonzentration zur Sicherung optimaler Menge des im Regenerierungsprozess verwendeten Regenerationsmittels, am besten der Sole, und am günstigsten NaCl oder KCl oder des Kallumpermanganats, geregelt.

## Revendications

1. Appareil de contrôle (1) destiné au système de traitement de l'eau comprenant un filtre chimique (3), un filtre mécanique (5), un conditionneur (4) et une pompe doseuse (6) où tous les éléments énumérés sont joints à la canalisation principale (2), **caractérisé en ce qu'**il contient un dispositif à régler la tension (BP) *alimenté par un butoir 3 (BUF.3) où les valeurs de la pression d'eau dans la canalisation principale (2) mesurées à l'aide d'un transducteur de pression (7)* et contient un dispositif qui contrôle le filtre chimique (BF) fournissant au moteur du filtre chimique (3M) coopérant avec le filtre chimique (3) un signal commandé par le butoir 14 (BUF.14) et dans lequel le dispositif qui contrôle le filtre chimique (BF) est alimenté *par* un butoir dédié 1 (BUF 1) où les valeurs de flux d'eau sont mesurées avec un détecteur Hall de filtre chimique (3H) qui coopère avec le filtre chimique (3) et qui est aussi alimenté par un butoir 2 (BUF.2) où les valeurs de la position du moteur du filtre chimique (3M) sont mesurées par un détecteur optique du filtre chimique (30), qui coopère avec le filtre chimique (3), le mieux avec une cellule photoélectrique, et cela possède un dispositif qui contrôle le travail du filtre de rinçage contrecoup (BBF) qui envoie au filtre mécanique (5) le signal qui commande [*le signal commandé*] le procès automatique du rinçage contrecoup par le butoir dédié 13 (BUF 13) et il possède un dispositif qui contrôle le travail de la pompe doseuse (BDP) qui envoie à la pompe doseuse (6) le signal commandé par le butoir dédié 12 (BUF 12) et possède un dispositif qui contrôle le travail du conditionneur (BC) fournissant au moteur du conditionneur (4M) coopérant avec le conditionneur (4), le signal commandé à travers le butoir dédié 10 (BUF.10) et dans lequel le dispositif qui pilote le travail du conditionneur (BC) est alimenté par le butoir dédié 4 (BUF 4), où les valeurs de flux d'eau sont mesurées avec le détecteur Hall du conditionneur (4H) qui coopère avec le conditionneur (4) et qui est aussi alimenté par le butoir dédié 5 (BUF. 5) où les valeurs de la position du conditionneur du moteur (4M) sont mesurées à l'aide d'un détecteur optique du conditionneur (40) coopérant avec le conditionneur (4), le mieux avec une cellule photoélectrique, et cela contient un dispositif qui contrôle le travail du générateur de chlore et du détecteur de conductance (BCC) qui envoie au générateur de chlore et au dispositif de contrôle de conductance (4C) coopérant avec le conditionneur (4), le signal commandé par le butoir dédié 6 (BUF 6) et qui est muni d'interface (1F) servant à la communication avec les dispositifs extérieurs, par un convertisseur de préférence (8), et un routeur (9) avec l'ordinateur extérieur (10) ou l'ordinateur en réseau (10') via le réseau (11).

2. L'appareil de contrôle conforme à la revendication 1, **caractérisé en ce que** le dispositif qui contrôle le filtre chimique (BF) reçoit [*lui sont envoyées*] des données générées par un dispositif servant à régler la tension (BP) et les données concernant le procès de rinçage automatique contrecoup du dispositif qui contrôle le travail du filtre de rinçage contrecoup (BBF)

3. L'appareil de contrôle conforme à la revendication 1 ou 2 **caractérisé en ce que** le dispositif qui contrôle le travail du conditionneur (BC) reçoit [*lui sont envoyées*] les données générées par le dispositif à régler la tension (BP) ainsi que les données concernant le procès de rinçage automatique contrecoup du dispositif qui contrôle le travail du filtre de rinçage contrecoup (BBF) et les données concernant la production du chlore et la conductance générées par un dispositif qui contrôle le travail du générateur de chlore et du détecteur de conductance (BCC) qui dirige le travail de générateur de chlore et du détecteur de conductance (4C) à travers le butoir dédié 6 (BUF.6).

4. L'appareil de contrôle conforme à la quelconque des revendications précédentes **caractérisé en ce que** le dispositif qui contrôle le travail du filtre de rinçage contrecoup (BBF) échange les données avec le dispositif qui contrôle le filtre chimique (BF) et le dispositif qui contrôle le travail du conditionneur (BC) et **en ce que** dans le dispositif qui contrôle le travail de la pompe doseuse (BDP) sont envoyées les données du dispositif qui contrôle le travail du conditionneur (BC).

5. L'appareil de contrôle conforme à la quelconque des revendications précédentes **caractérisé en ce qu'**il est muni de l'entrée de l'ensemble du blocage (1N1) qui se joint par le butoir dédié 7 (BUF.7) afin de pouvoir bloquer immédiatement le procès de la régénération du filtre chimique (3) ou du conditionneur (4) ou du filtre mécanique (5).

6. L'appareil de contrôle conforme à la quelconque des revendications précédentes **caractérisé en ce qu'**il est muni de l'entrée de l'ensemble de régénération du conditionneur (1N2) qui se joint par le butoir dédié 8 (BUF.8) afin de pouvoir mettre en marche immédiatement le procès de la régénération du conditionneur (4) et il est muni de l'entrée de l'ensemble de génération du filtre chimique (1N3) qui se joint par le butoir dédié 9 (BUF.9) afin de mettre en marche immédiatement le procès de régénération du filtre chimique (3).

7. L'appareil de contrôle conforme à la quelconque des revendications précédentes **caractérisé en ce qu'**il est muni de la sortie d'alarme (OUT1) qui se joint par le butoir dédié 10 (BUF.10) afin de mettre en marche immédiatement un dispositif d'alarme, le mieux une lumière et/ou un dispositif sonore, un bip sonore ou un vibreur sonore.

8. L'appareil de contrôle conforme à la quelconque des revendications précédentes **caractérisé en ce qu'**il est muni de l'unité centrale (CPU), unité de mémoire (FLASH), une montre de temps réel (RTC) avec une pile (BAT) et l'écran LCD (LCD) avec un rétroéclairage (BL) et un pavé tactile (TP) ou un écran tactile (LCD+TP+BL).

9. L'ensemble de traitement de l'eau muni de l'appareil de contrôle décrit dans quelconque des revendications 1-8 et se composant d'un filtre chimique (3), un filtre mécanique (5), un conditionneur (4) et une pompe doseuse (6), où tous les éléments énumérés sont joints à la canalisation principale (2), **caractérisé en ce que** l'appareil de contrôle (1) se joint au transducteur de pression (7) afin de mesurer la tension d'eau dans la canalisation principale (2) et avec un détecteur de Halle du filtre chimique (3H), détecteur optique du filtre chimique (30) et le moteur du filtre chimique (3M) où ils coopèrent tous avec le filtre chimique (3) et le filtre mécanique (5) et avec le détecteur Hall du conditionneur (4H), le détecteur optique du conditionneur (40), le moteur du conditionneur (4M) et le générateur de chlore et le détecteur de la conductance (4C), dont touts coopèrent avec le conditionneur (4), et avec la pompe doseuse (6) et avec des dispositifs extérieurs, le mieux par un convertisseur (8), et un routeur (9) avec l'ordinateur extérieur (10) ou l'ordinateur en réseau (10') via le réseau (11).

10. L'ensemble de traitement de l'eau conforme à la revendication 9, **caractérisé en ce que** le filtre chimique (3), de mieux un déferrisateur, est muni d'une valve du filtre chimique (3V) et le conditionneur (4) est muni d'une valve de conditionneur (4V).

11. L'ensemble de traitement d'eau conforme à la revendication 9 ou 10 **caractérisé en ce que** le filtre chimique (3), de mieux un déferrisateur, est muni d'un réservoir pour l'agent de génération du filtre chimique (3R) et d'une sortie des eaux-usées du filtre chimique (3S), par contre le conditionneur (4) est muni d'un réservoir pour l'agent de génération du conditionneur (4R) et d'une sortie des eaux-usées du conditionneur (4S).

12. L'ensemble de traitement d'eau conforme à la revendication 9 ou 10 ou 11 **caractérisé en ce que** l'appareil de contrôle (1) est alimenté par le courant électrique par l'adaptateur 12V AC (ADAP) et l'appareil de contrôle (1) est placé, dans une boîte imperméable de préférence, sur le mur de la pièce de traitement d'eau ou dans le boîtier du filtre chimique (3) ou dans le boîtier du conditionneur (4).

13. La méthode de génération automatique de l'ensemble de traitement de l'eau composé du filtre chimique (3), filtre mécanique (5), conditionneur (4) et pompe doseuse (6) où tous les éléments sont joints à la canalisation principale (2), comme cela a été décrit dans quelconque des revendications 9-12 et qui est muni de conditionneur décrit dans quelconque des revendications 1-8, **caractérisé en ce que** l'appareil de contrôle mentionné (1) contrôle la capacité de traiter l'eau par l'ensemble de traitement de l'eau mentionné et met en marche le cycle de génération des éléments donnés de l'ensemble conformément à leur performance réel et/ou la fréquence demandée, par contre le temps et l'intensité du procès de rinçage contrecoup des gisements qui filtrent, qui est alimenté avec de l'eau sous tension provenant de la canalisation principale, sont réglés à l'aide de l'appareil de contrôle, l'agent de régénération est administré sous forme d'une solution saturée, de préférence eau salée et le temps de régénération est réglé conformément à la tension réelle de l'eau et la concentration réelle de la solution afin d'assurer la quantité optimale de l'agent de génération, du sel de préférence, et le mieux NaCl ou KCl ou le permanganate de potassium dont on se sert dans le procès de génération.
